Europäisches Patentamt

European Patent Office

Office européen des brevets

(19)

(11) Publication number: **0 010 340**
**B1**

(12) **EUROPEAN PATENT SPECIFICATION**

(45) Date of publication of patent specification: **18.05.83**

(21) Application number: **79200605.8**

(22) Date of filing: **19.10.79**

(51) Int. Cl.³: **B 05 C 7/04, B 65 G 54/02, B 05 C 11/08**

(54) **Apparatus using a centrifugal process for removing adhering liquid from and/or evenly distributing adhering liquid over the surface of articles.**

(30) Priority: **23.10.78 NL 7810558**

(43) Date of publication of application:
**30.04.80 Bulletin 80/9**

(45) Publication of the grant of the patent:
**18.05.83 Bulletin 83/20**

(84) Designated Contracting States:
**AT BE CH DE FR GB IT LU NL SE**

(56) References cited:
**BE - A - 697 364**
**DE - A - 2 438 972**
**DE - C - 714 212**
**FR - A - 895 037**
**GB - A - 499 653**
**US - A - 2 640 584**
**US - A - 3 565 234**

(73) Proprietor: **Thomassen & Drijver-Verblifa N.V.**
**Zutphenseweg 51**
**NL-7418 AJ  Deventer (NL)**

(72) Inventor: **Veenstra, Jelle**
**Lindelaan 4**
**NL-7431 CD Diepenveen (NL)**

(74) Representative: **Arnold, Abraham François et al,**
**Octrooibureau Arnold & Siedsma No. 1,**
**Sweelinckplein**
**NL-2517 GK  The Hague (NL)**

Courier Press, Leamington Spa, England

Apparatus using a centrifugal process for removing adhering liquid from and/or
evenly distributing adhering liquid over the surface of articles.

The invention relates to an apparatus using a centrifugal process for removing adhering liquid from and/or evenly distributing adhering liquid over the surface of articles. In order to obtain an even distribution of adhering liquid over the inner surface of cans an apparatus, using a centrifugal process is known from the German patent 714.212. This apparatus comprises a rotatable drum having suction openings connected with a suction conduit. The cans to be treated are placed with their bottom ends on said suction openings and are thus attached to the drum by suction. Thereafter the drum carrying the plurality of radially pointing cans is rotated as to remove and to distribute the excess of liquid previously contained in the cans thus using a centrifugal process. This apparatus is not able to handle cans or other articles in a continuous process. For removing liquid several methods and apparatus for carrying out such methods are known, such as by heating or by blowing a gas such as air therealong in order to vaporize the liquid or by rinsing with another liquid. Thereby the liquid to be removed is distributed in the air or in another liquid giving rise to pollution problems or causing additional expense for the subsequently required separation. Up to now, attempts for removing liquid by centrifugal forces were deemed to be unsuitable since maintaining the articles in a continuous succession at a suitable circumferential speed for a sufficient period of time was deemed not to be practically possible.

The British patent 499.653 described a method for coating the inside surface of containers by rotating or spinning of the cylindrical containers with their open ends directed downwardly about their axes. The centrifugal forces are only used in order to obtain a close contact between the coating liquid and the interior surface of the container, whereas the liquid drains from the container under gravitational forces. Therefore, it takes a relatively long time to remove the excess of viscous and/or tenacious liquid from the container.

The invention provides for solving said problem an apparatus of the kind as described hereinbefore for continuously handling of magnetically attractable articles, said apparatus being characterized by the combination:

of a magnetic conveyor comprising a hollow, non-magnetic drum mounted for rotation about its axis and a stationary helical series of magnets being coaxially arranged inside and closely adjacent to said drum;

of a feeding conveyor feeding articles, being at least partly of ferromagnetic material, onto said drum, said articles being held on said drum by said stationary helical series of magnets, said drum being rotated both to subject the articles and the adhering liquid to centrifugal forces and to move the articles around the longitudinal axis along a helical path defined by the magnets; and

of a discharging conveyor onto which said articles are discharged from said drum at the end of said helical path.

For removing liquid from hollow articles such articles are positioned with their open end remote from the axis of the drum. For possibly evenly and thereby effectively distributing the forces working on the adhering liquid the axis of the drum and of the helical series of magnets is preferably vertical. Both applications already yield a good effect if the helical series of magnets comprise one revolution. For viscous and/or tenacious adhering liquids higher peripheral speeds and/or smaller radii and/or more revolutions are required than for thin fluid and/or weakly adhering liquids and for smooth surfaces. Such variables can be empirically evaluated in practice. It is clear that for evenly distributing liquid over an article the radius of the drum has to be chosen large with respect to the dimension of the article. The articles kept by magnetical attraction on the outer surface of the drum shift in axial direction because of the pitch of the helical series of magnets. For facilitating said shift a smooth outer surface of the drum is to be preferred.

The feeding velocity of the articles is not critical and particularly not when a drum having a smooth outer surface is used, since the articles first will slip on the drum and thereafter gradually be dragged along by the drum. For the same reason the feeding direction of the articles is not important and can for instance both be tangential and radial to the drum.

In order to prevent the liquid having been removed from the articles from hitting other articles being freed partially or entirely from liquid or over which the liquid has been evenly distributed, the feeding conveyor is preferably arranged with its delivery end at the lower portion of the drum having its axis vertical.

Particularly if large centrifugal forces are to be used the magnetic attracting forces to be used must be as good as possible, to which end the distance between the series of magnets and the drum has to be as small as possible. For being able to control said distance the drum can be conical and the helical series of magnets lie in the surface of a cone having the same apex angle as the drum. By a simple mutual axial movement said distance can be adjusted. When lacquering can bodies, particularly those closed at one end, a problem is the even distribution of the applied lacquer over the surface of the can bodies, since the lacquer accumulates either at the bottom or at the open end. A very suitable application of the apparatus according to the invention is the even distribution of lacquer over the inner surface of can bodies, to which end the can bodies after being sprayed with a volatile solvent containing lacquer are treated with this apparatus.

It should be noted that the German patent application DE—A—2.438.972 discloses a continuously operating apparatus which uses a rotating magnetic conveying drum for removing ferromagnetic impurities from cooling oil for mechanic tools. The drum comprises a rotating helical series of magnets which drag the impurities, attached to the drum surface by the magnetic forces, along a helical path over the outer surface of the drum out of the cooling oil. However, due to the low rotational speed of the helical series of magnetics the centrifugal forces are very weak and could not be used for removing the cooling oil adhered to the impurities.

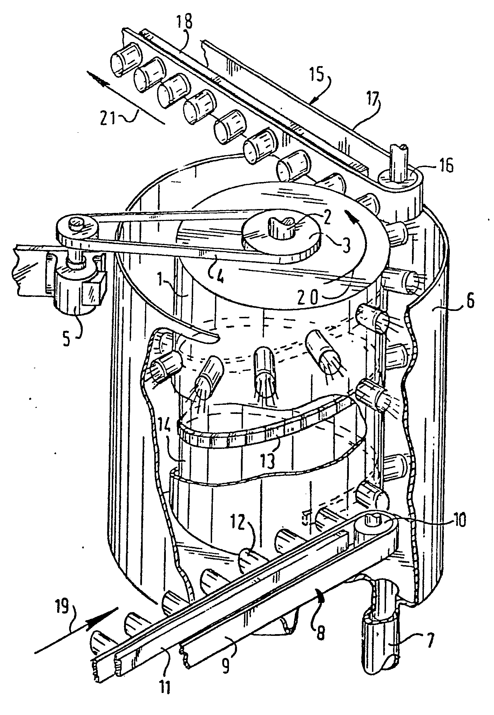

The invention will be exemplified on the basis of the attached drawing, in which a preferred embodiment of the apparatus according to the invention has been illustrated schematically and in perspective.

The schematically depicted apparatus for removing adhering liquid by centrifugal action from the hollow articles open at one end, comprises a hollow cylindrical drum 1 of non-magnetic material such as aluminum or stainless steel. Said drum 1 is positioned with its axis 2 vertical. The drum 1 is rotatable about its axis 2 and is driven through a rope pulley 3 which is connected to the drum 1 and around which a rope 4 is guided to a suitable driving motor 5. The drum 1 is driven in the direction of the arrow shown thereon. Coaxial with the drum 1 a collecting casing 6 is arranged around said drum 1 at some distance from the drum 1, in the bottom of said casing 6 a draining pipe 7 for liquid is connected. A feeding conveyor 8, in the shown embodiment comprising an endless belt 9 guided over a guiding roller 10, the part of the belt 9 towards the drum 1 being backed by a magnetic bar 11, is used for feeding can bodies 12 of steel plate, the bodies being closed at that end directed towards the drum 1. The conveyor 8 is arranged such that the magnetic bar 11 just ends at the lower end of a helical series of magnets 13 inside the drum 1. These magnets 13 are fastened to an immobile cylinder 14, also supporting the bearings for the drum. The magnets 13 are so arranged that they are closely adjacent the inner surface of the drum 1 without hindering the rotation thereof. At the end of the helical series the take up end of a discharging conveyor 15 is arranged. Said conveyor 15 is designed in the same manner as the conveyor 8 and is provided with a guiding roller 16 close by the upper end of the helical series of magnets 13, an endless belt 17 guided by said roller 16 and a magnetic bar 18 backing the part of the belt facing the drum 1.

The apparatus works as follows:

The steel can bodies 12 fed by the feeding conveyor 8 are kept against the endless belt 9 by the attraction of the magnet bar 11 and conveyed by said belt 9 in the direction of the arrow 19 to the drum 1 rotating in the direction of the arrow 20 inside the collecting casing 6. When arriving at the end of the magnetic bar 11 the can bodies 12 become subject to the attractive power of the lower end of the helical series of magnets 13 inside the drum 1 and are then due to the magnetic attraction of the magnets kept on the outer surface of the drum 1. The can bodies 12 are so arranged on the conveyor 8 that their closed ends will come in contact with the drum. Due to the rotation of the drum 1 the can bodies 12 are moving with the same velocity while due to the pitch of the helical series of magnets 13 an axial movement of the can bodies 12 over the cylinder surface of the drum 1 will occur. At the upper end of the helical series of magnets 13 the take up end of the discharging conveyor 15 is arranged, which conveyor 15 discharges the can bodies 12 on the belt 17 in the direction as indicated by the arrow 21, while being attracted by the magnetic bar 18.

While traversing the helical path on the drum 1 the can bodies 12 and the adhering liquid are subject to a centrifugal force. The can bodies 12 are kept on the drum 1 by magnetic attraction forces but the liquid is outwardly accelerated and partly flung from or out of the can bodies 12 and partly distributed over the surface of these can bodies. By varying the diameter and the rotational speed of the drum and the number of revolutions of the helical series of magnets 13 the effect of the apparatus can be varied.

From the above it will be apparent that the drum, instead of being a right circular cylinder of uniform diameter throughout, may be a truncated cone. The latter shape for both the drum and the series of magnets has the advantage of easily controlling the distance between said two parts. For preventing stray currents in the drum an electrically non-conductive drum may be advisable.

**Claims**

1. An apparatus using a centrifugal process for removing adhering liquid from and/or evenly distributing adhering liquid over the surface of articles (12), characterized by the combination:

of a magnetic conveyor comprising a hollow, non-magnetic drum (1) mounted for rotation about its axis (2) and a stationary helical series of magnets (13) being coaxially arranged inside and closely adjacent to said drum (1);

of a feeding conveyor (8) feeding articles (12), being at least partly of ferromagnetic material, onto said drum (1), said articles (12) being held on said drum (1) by said stationary helical series of magnets (13), said drum being rotated both to subject the articles (12) and the adhering liquid to centrifugal forces and to move the articles (12) around the longitudinal axis (2) along a helical path defined by the magnets; and of a discharging conveyor (15) onto which said articles (12) are discharged from said drum (1) at the end of said helical path.

2. An apparatus according to claim 1, characterized in that the axis (2) of revolution is vertical.

3. An apparatus according to claim 2, characterized in that the feeding conveyor (8) feeds said articles onto that part of the drum surface under which the lower end of the helical series of stationary magnets (13) has been arranged.

4. An apparatus according to claim 1, 2 or 3, characterized in that the drum (1) is electrically non-conductive.

5. An apparatus according to any one of the claims 1 to 4, characterized in that the drum is conical and the radially, outwardly pointing poles of the helical series of magnets lie in the surface of a cone having the same apex angle as the drum, said drum and said helical series of magnets being relatively, axially adjustable.

## Revendications

1. Appareil à effet centrifuge pour éliminer un liquide adhérent de la surface et/ou pour répartir uniformément un liquide adhérent sur la surface d'articles (12), caractérisé par le fait qu'il comprend, en combinaison:
un convoyeur magnétique comportant un tambour amagnétique creux (1) monté rotatif autour de son axe (2) et une série hélicoïdale d'aimants fixes (13) disposés coaxialement à l'intérieur et étroitement adjacents audit tambour (1);
un convoyeur d'alimentation (8) amenant des articles (12), constitué au moins en partie d'un matériau ferromagnétique, sur ledit tambour (1), lesdits articles (12) étant maintenus sur ledit tambour (1) grâce à ladite série hélicoïdale d'aimants fixes (13), ledit tambour étant entraîné en rotation et pour soumettre les articles (12) et le liquide adhérant à des forces centrifuges, et pour déplacer les articles (12) autour de l'axe longitudinal (2) le long de la trajectoire hélicoïdale définie par les aimants; et un convoyeur d'évacuation (15) sur lequel sont récupérés lesdits articles (12) à partir dudit tambour (1) à l'extrémité de ladite trajectoire hélicoïdale.

2. Appareil selon la revendication 1, caractérisé par le fait que l'axe de rotation (2) est vertical.

3. Appareil selon la revendication 2, caractérisé par la fait que le convoyeur d'alimentation (8) amène les articles sur la partie de la surface du tambour sous laquelle est située l'extrémité inférieure de la série hélicoïdale d'aimants fixes (13).

4. Appareil selon l'une des revendications 1 à 3, caractérisé par le fait que le tambour (1) est électriquement non-conducteur.

5. Appareil selon l'une des revendications 1 à 4, caractérisé par le fait que le tambour est conique et que les pôles dirigés radialement vers l'extérieur de la série hélicoïdale d'aimants sont situés sur la surface d'un cône dont l'angle au sommet est le même que celui du tambour, ledit tambour et ladite série hélicoïdale d'aimants étant axialement réglables en position l'un par rapport à l'autre.

## Patentansprüche

1. Vorrichtung zum Entfernen anhängender Flüssigkeit von der Oberfläche von Gegenständen (12) und/oder gleichmässig Verteilen von Flüssigkeit über die Oberfläche derselben unter Anwendung eines Zentrifugalvorahrens, gekennzeichnet durch die Kombination:
eines Magnetförderers, umfassend eine nichtmagnetische Hohltrommel (1), die um ihre Achsenlinie (2) drehbar ist, und eine ortsfeste, helische Reihe von Magneten (13), die koachsial in der Trommel (1) und an dieselbe eng angrenzend angeordnet sind;
eines Zufuhrförderers (8), der die mindestens teilweise aus ferromagnetischem Material bestehenden Gegenstände (12) bis auf die Trommel (1) zuführt, wobei die Gegenstände (12) durch die ortsfeste, helische Reihe von Magneten (13) auf der Trommel (1) festgehalten werden, und wobei dei Trommel rotiert wird, um die Gegenstände (12) und die anhängende Flüssigkeit Zentrifugalkräften auszusetzen, wie auch die Gegenstände (12) um die longitudinale Achsenlinie (2) länge eines durch die Magnete bestimmten, wendelartigen Weges zu bewegen; und eines Abfuhrförderers (15), auf den von der Trommel (11) aus die Gegenstände (12) am Ende des wendelartigen Weges gestellt werden.

2. Vorrichtung nach Anspruch 1, dadurch gekennzeichnet, dass die Umdrehungsachsenlinie (2) vertikal steht.

3. Vorrichtung nach Anspruch 2, dadurch gekennzeichnet, dass der Zufuhrförderer (8) die Gegenstände auf den jenigen Teil der Trommeloberfläche zuführt, unterhalb welchem das untere Ende der wendelartigen Reihe von ortsfesten Magneten (13) angeordnet ist.

4. Vorrichtung nach Anspruch 1, 2 oder 3, dadurch gekennzeichnet, dass die Trommel (1) elektrisch nichtleitend ist.

5. Vorrichtung nach einem der Ansprüche 1, 2, 3 und 4, dadurch gekennzeichnet, dass die Trommel kegelformig ist und die radial, auswärts gerichteten Pole der wendelartigen Reihe von Magneten in der Oberfläche eines Kegels liegt, der denselben Scheitelwinkel besitzt wie die Trommel, wobei die Trommel und die wendelartige Reihe von Magneten relativ, achsial verstelbar sind.